Europäisches Patentamt

European Patent Office

Office européen des brevets

(19)

(11) Publication number: **0 156 075**
**A2**

(12) **EUROPEAN PATENT APPLICATION**

(21) Application number: **84308823.8**

(22) Date of filing: **17.12.84**

(51) Int. Cl.⁴: **G 02 B 6/38**

(30) Priority: **05.03.84 US 586391**

(43) Date of publication of application:
**02.10.85 Bulletin 85/40**

(84) Designated Contracting States:
**BE DE FR GB IT NL SE**

(71) Applicant: **AUTOMATION INDUSTRIES INC.**
**500 West Putnam Avenue**
**Greenwich Connecticut 06830(US)**

(72) Inventor: **Balyasny, Marik**
**7358 Ruffner Avenue**
**Van Nuys California 91406(US)**

(72) Inventor: **Parker, Douglas A.**
**25203 Pennsylvania Avenue**
**Lomita California 90717(US)**

(74) Representative: **Warden, John Christopher et al,**
**R.G.C. Jenkins & Co. 12-15, Fetter Lane**
**London EC4A 1PL(GB)**

(54) Releasable connector for optical fibers.

(57) A fiber holder is received within one connector part of a plug and receptacle connector including a plug shell and a receptacle shell. A coupling ring carried by the plug shell is rotatable to drive the plug and receptacle together or apart depending upon the direction of rotation. The other connector part includes an alignment sleeve within which a second fiber holder is located along with the first fiber holder.

When the two connector parts are mated, closing rotation of the coupling ring pulls the two sets of fiber holders into the alignment sleeve and locates the fiber ends in a slightly spaced relation. On proper disposition of the fiber ends, a detent spring located within the plug housing has end projections which snap into recesses signifying both tactilely and aurally that a proper optical signal passing interconnection has been achieved.

EP 0 156 075 A2

-1-

The present invention relates generally to a releasable connector for optical fibers, and, more particularly, to an improved optical fiber connector for use under field conditions and which provides a positive indication when the connector parts are properly secured together.


BACKGROUND OF THE INVENTION

Optical fibers constructed of small glass or plastic fibers are widely used for transmitting optical signals. Occasionally, it is necessary either to interconnect two fibers or to repair a fiber which has been broken. Satisfactory interconnection of two such fibers requires that the fiber ends be faced off precisely at right angles, the facing ends be aligned and brought into close proximity but not touching. If the fibers actually touch, or there is not precise facing off of the fiber ends, then substantial degradation in performance can be expected.

An especially good fiber optics connection technique is described in United States patent application Serial No. 306,330, Optical Fiber Connector, by John B. Gresty, in which two fibers to be joined, having their ends faced off are each received in the interstices of three precisely formed cylindrical rods or pins. The faced-off fiber ends are located just inwardly of the outer ends of the pins such that when the two three-pin sets are brought into end contacting relation, the fibers themselves are maintained in a slightly spaced relation. A hollow tubular alignment sleeve including a plurality of leaf spring parts resiliently retains the three-pin sets in an aligned relation and with the pins in end contacting arrangement. Although in the technique described in this application, the fibers are interconnected in such a way as to provide optical transmission, however, the connector as such is not suitably secure for adverse environmental use in that vibration and shocks can cause the pins and included fibers to separate. Also, moisture, dust and dirt can make their way into the alignment sleeve and interfere with optical signal transmission.

In accordance with an aspect of the invention there is provided a releasable connector for maintaining first and second optical fibers aligned and with the ends in predetermined spaced relation for transmitting an optical signal between the fibers, comprising:

first and second fiber holders for holding the respective first and second optical fibers;

first and second connector parts releasably and telescopingly mateable together;

an alignment sleeve mounted within the first connector part;

said first fiber holder being mounted in the first connector part and received within the alignment sleeve;

said second fiber holder being mounted within the second connector part and releasably received within the alignment sleeve on mating of the first and second connector parts.

Preferably the connector includes means mounted within one of said connector parts for providing an aural and tactile indication when the connector parts are sufficiently mated to locate the first and second fiber holders in optical signal transmitting relation between the optical fibers.

The preferred embodiment hereafter described is a relatively small, field-useable, single channel fiber optic connector which reliably operates in a wide range of adverse environments (e.g., temperature, moisture, shock, vibration). The connector is so constructed as to permit rapid and repeated mating and unmating of the connector parts. Still further, an interfacial seal is established between the connector parts which provides springlike characteristics for aiding in maintaining proper fiber alignment and, as well, seals against undesirable ingress of dirt, dust and moisture to the connector interior.

More particularly, a fiber holder (e.g., three-pin holder ) is received within one connector part of a plug and receptacle connector which includes a plug shell with a receptacle shell that can be received therewithin. A coupling ring carried by the plug shell is rotatable to drive the plug and receptacle together or apart depending upon the direction of rotation. The other connector part includes an alignment sleeve within which a second fiber holder is located with the other fiber to which the first fiber is to be connected.

When the two connector parts are mated together, closing rotation of the coupling ring pulls the two fiber holders and included fibers into the alignment sleeve and in the case of a three-pin holder locates the pins into an end contacting relation. In

0156075

the latter case on contact of the ends of the pins, a detent spring located within the plug housing has end projections which snap into recesses thereby signifying both tactilely and aurally that a proper optical signal passing interconnection has been achieved for the two fibers.


DESCRIPTION OF THE DRAWING

Figure 1 shows the plug and receptacle parts of the fiber connector to be described shown in separated condition.

Figure 2 shows the plug and receptacle parts of Figure 1 joined.

Figure 3 is a side elevational, sectional view taken along the line 3-3 of Figure 2.

Figure 4 is an end elevational, sectional view taken along the line 4-4 of Figure 3.

Figure 5 is a side elevational, sectional view similar to Figure 3 showing the fiber connector in a state of partial interconnection.

Figure 6 is an exploded view of a three-pin connection means with included fiber.

Figure 7 is a sectional view taken along line 7-7 of Figure 3.

Figure 8 is a depiction of a mated connector showing an adaptation for wall mounting.

Figure 9 is an end elevational view taken along line 9-9 in Figure 4.

## DESCRIPTION OF A PREFERRED EMBODIMENT

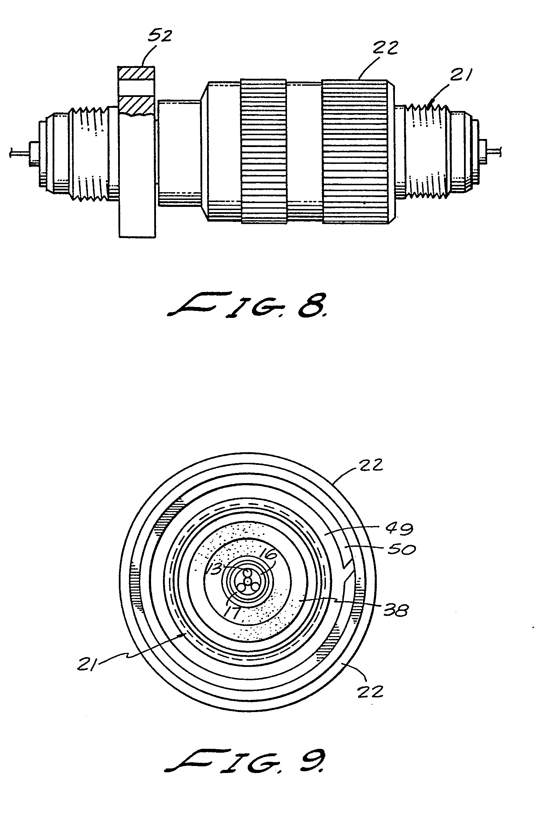

The connector to be described is especially useful for optically interconnecting the two ends of a single glass fiber which has been broken or otherwise severed or the ends of two individual fibers. With reference now particularly to Figure 6 of the drawing, a jacketed fiber 10 has a glass or plastic fiber core and cladding 11 which are coaxially concentric with an outer covering 12. An optical signal applied to one end of the fiber core is transmitted along the full fiber length. In the case of two fibers or pieces of the same fiber required to be interrelated so as to pass a light signal therebetween, the ends of the fibers must be faced off precisely at 90 , the fibers aligned and the ends held in a slightly spaced relation. Otherwise, a light beam being transmitted along the one fiber will suffer adverse reflection and/or absorption, and dispersion losses at the junction with the other fiber, degrading the optical signal.

For connecting two fibers or two fiber parts together, a length of the coating or covering material 12 is removed from the optical fiber, leaving an extent of the bare fiber 11 as seen best in Figure 6. Three identical alignment rods 13 are needed for each connector terminus, each of the rods having a plurality of circumferential ridges 14 and an immediately adjacent reduced diameter portion 15 with the major extent consisting of a smooth uniform diameter of a length slightly less than that of the bare fiber to be secured thereby. In assembly according to the co-pending United States patent application 306,330, the three rods 13 are received about a fiber 10 with the peripheries of the cylindrical portions contacting each other and the bare fiber and the ridges 14 biting or clamping into the fiber covering 12. The rods with included fiber are then slidingly positioned in a hollow, metal

0156075

tubular ferrule 16 with the uniform cylindrical portion of the three rods and included fiber extending outwardly therefrom. The ferrule is then deformed or crimped inwardly so as to clampingly engage the rods 13 and fiber 10 and positively position the fiber in a properly aligned relationship between the rods 13 with the outer ends of the fiber located slightly inwardly of the outermost ends of the rods.

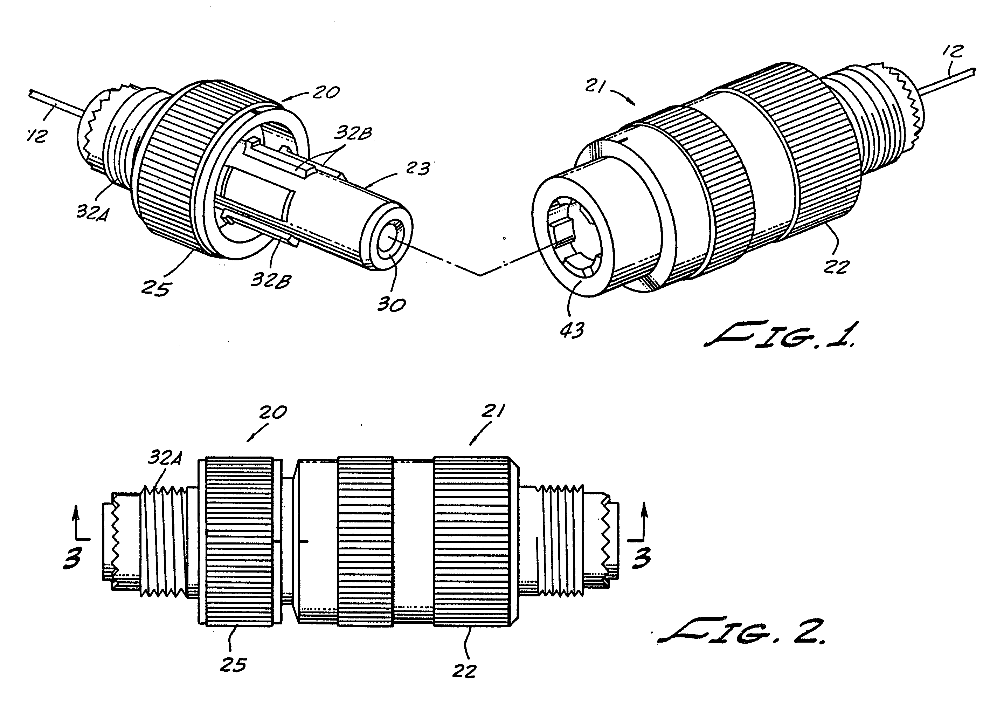

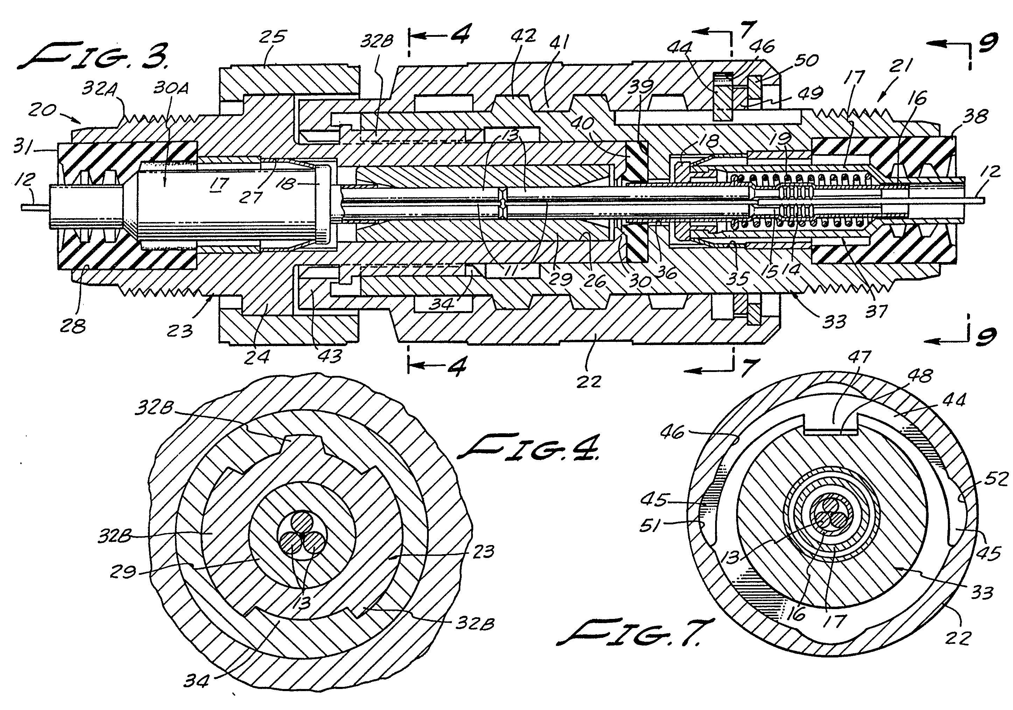

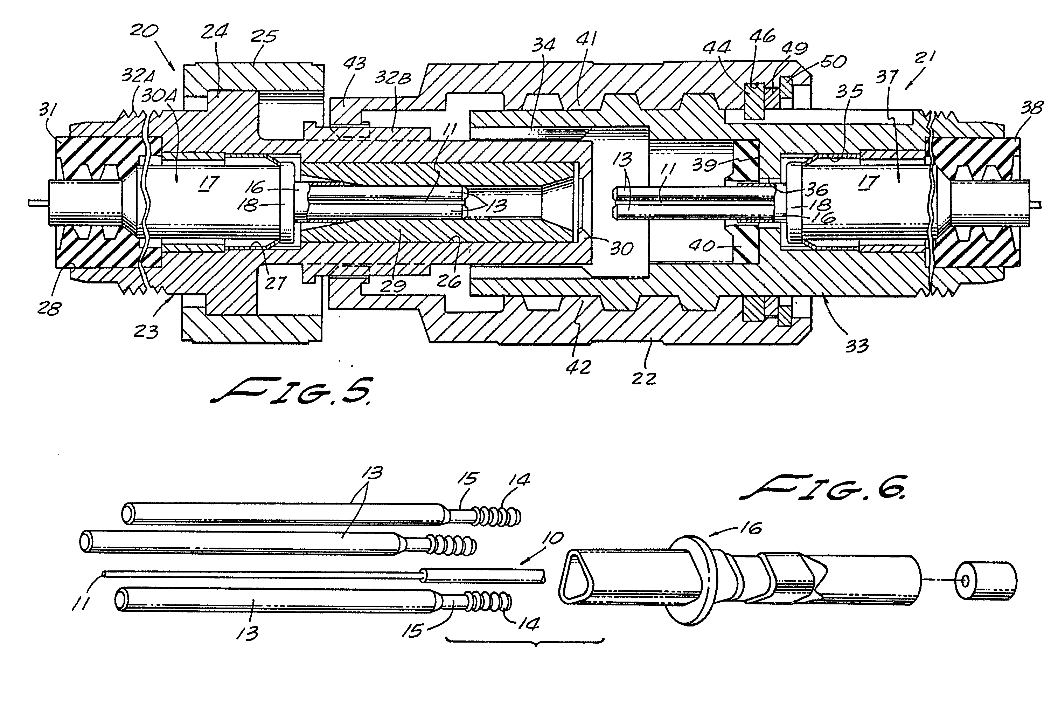

Both fibers to be interconnected with one another must be mounted in a separate ferrule 16 as just described and the ferrules, in turn, are mounted within a generally cylindrically shaped housing 17 having an enlarged head 18 at the end from which the rods 13 extend (Figure 3). A coil spring 19 located within the cylindrical housing 17 engages a flangelike part on the ferrule outer surface and the interior wall of the house 17 to urge the pins and included fiber resiliently away from the enlarged head 18. The mounting technique of the fiber between three pins and clampingly received within the ferrule which, in turn, is located within a cylindrical housing is disclosed in the copending Gresty application.

Turning now to Figures 1 and 2, there are shown two connector parts 20 and 21 which can be releasably fitted together in order to optically interconnect two fibers or fiber pieces which have been mounted in the manner just described. More particularly, the plug connector part 21 includes internal openings which enable receipt of similarly dimensioned portion of the receptacle connector part 20 therewithin, and on rotation of a coupling ring 22 in the proper direction the two rod mounted glass fibers are pulled together into proper end related condition for passing an optical signal therealong. Also, as a further aspect, by means which will be described, when the two fibers are brought into proper end-facing relation for transmission of an optical signal, both tactile and aural indication is given.

As can be seen best by comparison of Figures 1 and 5 a receptacle 20 consists of an elongated generally cylindrical member 23 with an enlarged circumferential flange 24 to which a cylindrical shell 25 is affixed. There is a continuous opening extending through the member 23 along its longitudinal axis including a first relatively small diameter portion 26 which opens into a larger diametral portion 27 and finally into a still larger

0156075

-10-

diameter opening 28.

An alignment sleeve 29 consists of a hollow tubular element having an outer diameter such that it fits snugly within the smaller diametral portion 26 with one end of the sleeve abutting against inwardly directed flange portions 30 on the housing. The alignment sleeve has resilient walls such that when three rods 13 and included bare fiber 11 are received within the sleeve bore, the fiber will be precisely aligned along the longitudinal axis of the sleeve.

A housing 17 with included rods 13 and fiber 11 mounted as described and identified generally as at 30A is passed through the opening 28 and located within the opening 27 with the rods 13 extending into the alignment sleeve 29 to terminate at approximately the middle thereof. A soft rubber or plastic grommet 31 is received within the opening 28 and onto the ends of the housing 17 serving both to secure it physically in place within the receptacle and also preventing dirt, dust and moisture from making its way to the interior of the receptacle.

Threads 32A are provided on the outer end portion of the receptacle housing for connecting with backshell (not shown). Also, on the outer surface of the member in the region of the smallest diametral portion 26 there is provided a set of keys 32B for coacting with keyways 34 on the plug connector part 21 in a way that will be described so that only a properly coded plug and receptacle can be mated to one another. As shown in Figure 8, a flangelike plate 52 may be affixed to the receptacle for mounting to a wall, for example.

The plug connector part 21 has a hollow, generally cylindrical housing 33 with an open end sufficient to receive the receptacle member 23 therewithin. In addition, a set of keyways 34 are formed on the inner surface of the plug housing which are coded to interfit with the keys 32B on the receptacle. The central bore of the plug housing 33 also includes a chamber 35 of sufficient size to receive a further ferrule with rod-aligned fiber, the fiber enclosing rods 13 of which extend through an opening 36 facing toward the plug open end. The fully assembled terminus identified generally as at 37 is identical to the assembled terminus 30 mounted in the receptacle.

A grommet 38 is received over the outwardly extending end of the assembled fiber retention unit 37 and fitted into the enlarged end portion of chamber 35. As with the receptacle grommet 31, this grommet 38 seals the plug interior against the ingress of dirt, dust and moisture.

The hollow interior of the plug shell housing 33 terminates in an iner wall 39 surrounding the opening 36 through which rods 13 and included fiber from retention unit 17, 18 extend. A soft rubber or plastic washer 40 located against the wall surface 39 and a central opening through which the rods 13 and included fiber passes. The washer serves as an interface seal 40 for the forward end of the receptacle member 23 when the connector parts are fully mated.

The coupling ring 22 consists of a generally cylindrical metal shell having an internal set of threads 41 for coacting with similarly dimensioned threads 42 on the plug housing 33. The outer open end of the coupling ring 22 (i.e., facing the receptacle) has a radially inwardly directed flange 43 having a set of keyways which can accept the receptacle keys 32. Also, when the plug is totally disengaged from the receptacle the keyways of the coupling ring 22 and plug housing 33 are aligned

-13-

enabling an appropriately coded receptacle to be mated therewith.

With reference simultaneously to Figures 5 and 7, there is shown a substantially semicircular detent spring 44 each end of which has a radially outwardly extending projection 45. The spring slidingly fits within a groove 46 in the coupling ring inner wall and is fixed against rotation about the plug housing 33 by retention of the spring key 47 within retaining groove 48 on the plug housing outer surface. Cover 49 and retaining ring 50 (Figure 9) hold the detent spring 44 within the coupling ring.

A pair of recesses 51 and 52 on the coupling ring inner wall are so located as to be immediately opposite the detent spring projections 45 when the connector parts are fully mated. At that time, due to the inherent spring-like characteristics of the detent spring, the projections 45 snap into the recesses providing a tactile and aural indication of connection being achieved.

With respect to use, the receptacle member 23 is inserted through the open end of the coupling ring and, since the keyways of the plug housing and coupling ring are aligned, this may be continued until the flange end of the coupling ring extends past the keys 32B (Figure 3). The coupling ring 22 is then rotated which draws the connector parts together to locate the two sets of rods 13 and included fibers in end touching condition as shown in Figure 3. When this occurs, the detent springs snap into the recesses 51, 52 providing the desired tactile and aural indication that the two fibers are in their proper, slightly end spaced, optical signal transferring condition.

In the foregoing description of a preferred embodiment of the invention, the particular fiber holder used was a three-pin holder. However, it is considered within the spirit of the invention to use other fiber holders, for example, a holder having a precisely machined opening through which a fiber to be converted is extended.

CLAIMS:

1.      A releasable connector for maintaining first and second optical fibers aligned and with the ends in predetermined spaced relation for transmitting an optical signal between the fibers, comprising:

first and second fiber holders (13, 16, 17) for holding the respective first and second optical fibers;

first and second connector parts (20, 21) releasably and telescopingly mateable together;

an alignment sleeve (29) mounted within the first connector part;

said first fiber holder being mounted in the first connector part and received within the alignment sleeve (29);

said second fiber holder being mounted within the second connector part and releasably received within the alignment sleeve on mating of the first and second connector parts.

2.      A connector according to claim 1 including means (45) mounted within one of said connector parts for providing an aural and tactile indication when the connector parts are sufficiently mated to locate the first and second fiber holders in optical signal transmitting relation between the optical fibers.

3.      A releasable connector according to claim 1 or claim 2, in which one of the connector parts includes a coupling ring (22) threaded thereon and flange means for engaging the other connector part for pulling the connector parts together when the coupling ring is rotated on said one connector in a first direction and for pushing the connector parts apart when rotated in a second direction.

4.      A releasable connector according to claim 3, in which full rotation of the coupling ring from connector unmated to mated conditions is substantially 90 degrees.

5.      A releasable connector according to claim 3 or 4, in which the coupling ring includes a generally hollow metal shell having the flange means (43) at one open end and the other open end being received on the one connector part to which the coupling ring is threaded, and said means for providing an aural and tactile indication including a substantially semicircular spring (45) mounted within the inner surface of the coupling ring closely adjacent the other open end thereof.

6.      A releasable connector according to any preceding claim, in which an interface seal (40) interrelates the first and second connector parts when mated.

7.      A releasable connector according to claim 6, in which the interface seal (40) is constructed of soft rubber.

8.      A releasable connector according to claim 6, in which the interface seal (40) is constructed of soft plastic.

9.      A releasable connector according to claim 1, in which the first connector part includes a hollow generally cylindrical shell (23) which is slidably receivable within the second connector part, and said alignment sleeve (29) being secured within the cylindrical shell of said first connector part.

10. A releasable connector according to any preceding claim, including a coupling ring (22) rotatively arranged about the second connector part (21) and having means (41) releasably engaging the first connector part such that rotation of the coupling ring moves the connector part or away from each other depending upon the direction of rotation.

*FIG.1.*

*FIG.2.*

Fig.3.

Fig.4.

Fig.7.

FIG.5.

FIG.6.

0156075

FIG. 8.

FIG. 9.